# EUROPÄISCHE PATENTSCHRIFT

(11) **EP 0 358 950 B1**
(45) Veröffentlichungstag und Bekanntmachung des Hinweises auf die Patenterteilung: **13.09.1995**
(21) Anmeldenummer: 89114790.2
(22) Anmeldetag: 10.08.1989
(51) Int. Cl.: C08K 3/04, C08J 9/00, C08L 75/04, C08K 9/02, C09K 21/02, C08G 18/40

(54) **Verfahren zur Herstellung von Polyurethanschaumstoffen**
Process for preparing polyurethane foams
Procédé pour préparer des mousses de polyuréthane

(30) Priorität: 23.08.1988 DE 3828544
(43) Veröffentlichungstag der Anmeldung: 21.03.1990
(73) Patentinhaber: BAYER AG, 51368 Leverkusen (DE)
(72) Erfinder: Haas, Peter, Dr., D-5657 Haan 1 (DE); Hettel, Hans, Dr., D-5064 Roesrath-Forsbach (DE)

(56) Entgegenhaltungen:
- EP-A- 0 187 330
- EP-A- 0 337 228
- DE-A- 2 832 253
- GB-A- 2 168 706

## Beschreibung

Seit langem wird versucht, Polyurethanschaumstoffe auf der Basis von Polyetherpolyolen und Polyesterpolyolen flammwidrig einzustellen. Hierzu können unterschiedliche Phosphorsäureester, aber auch Metalloxide herangezogen werden. In der GB-A 2 168 706 wird als Flammschutzmittel für PUR-Polyetherschaumstoffe expandierbarer Graphit vorgeschlagen. Dabei wurden jedoch folgende Nachteile festgestellt:
- starke Dochtwirkung durch die Graphitkomponente, die zum Weiterbrennen führt
- starke Flugaschenbildung und zum Teil noch glühende Rußbildung
- feinpulvriger, sehr leicht verstäubbarer Abbrand.

Überraschend wurde gefunden, daß bei einer Verwendung von expandierbarem Graphit als Flammschutzmittel in PUR-Schaumstoffen auf Basis von Dispersionen von Polymeren enthaltenden höhermolekularen Hydroxylverbindungen diese für eine technische Nutzung hinderlichen Nachteile nicht auftreten.

Setzt man in einem Vergleich zu den in der GB-A 2 168 706 beschriebenen PUR-Etherschaumstoffen stattdessen erfindungsgemäße Schaumstoffe ein, so erhält man schon mit expandierbarem Graphit alleine, besonders jedoch in Kombination mit anorganischen flammwidrigen Zusatzstoffen folgendes Erscheinungsbild bei einer Beflammung dieser Schaumstoffe:
- keine Dochtwirkung durch den Graphitzusatz
- keine Flugaschenbildung
- keinen pulvrigen Abbrand
sondern einen
- stark carbonisierenden
- selbstverlöschenden
- nicht tropfenden
Schaumstoff.

Dies wird durch eine Reihe gebräuchlicher Flammschutznormen belegt, wie z.B.
BS 5852, Part 2 Crib 5-Test, DIN 4102, MVSS and UL 94.

Gegenstand der Erfindung ist ein Verfahren zur Herstellung von Polyurethanschaumstoffen durch Umsetzung von 1) Polyisocyanaten mit 2) Dispersionen von Polymeren enthaltenden höhermolekularen Hydroxylverbindungen, die durch Umsetzung von Mono- und/oder Polyisocyanaten mit primäre und/oder sekundäre Aminogruppen aufweisenden Polyaminen und/oder Hydrazinen und/oder Hydraziden und/oder Alkanolaminen in einem 1 bis 8 primäre und/oder sekundäre Hydroxylgruppen aufweisenden Polyether mit einem Molekulargewicht von 400 bis 16.000 hergestellt worden sind, in Gegenwart von 3) Wasser und/oder organischen Treibmitteln und von 4) Katalysatoren und 5) Flammschutzmitteln, gegebenenfalls in Gegenwart von 6) Verbindungen mit mindestens zwei gegenüber Isocyanaten reaktionsfähigen Wasserstoffatomen und einem Molekulargewicht von 32 bis 399 sowie 7) an sich bekannten oberflächenaktiven Zusatzstoffen und weiteren, an sich bekannten Hilfsmitteln, dadurch gekennzeichnet, daß als Flammschutzmittel 5)
a) 1 bis 35 Gew.-Teile (bezogen auf 100 Gew.-Teile 2)) eines durch anorganische blähfähige Materialien modifizierten Graphits, bevorzugt 1 bis 30 Gew.-Teile, besonders bevorzugt 2,5 bis 20 Gew.-Teile alleine, bevorzugt jedoch in Kombination mit
b) 1 bis 35 Gew.-Teile (bezogen auf 100 Gew.-Teile 2)) eines anorganischen Co-Flammschutzmittels, bevorzugt 1 bis 30 Gew.-Teile, besonders bevorzugt 2,5 bis 20 Gew.-Teile,
verwendet werden.

Bevorzugte Ausführungsformen des erfindungsgemäßen Verfahrens sind dadurch gekennzeichnet,
- daß ein Sulfat-enthaltender Blähgraphit, dessen Sulfat-Gehalt zwischen 1 und 40 Gew.-%, bevorzugt 1 bis 30 Gew.-%, besonders bevorzugt 5 bis 20 Gew.-% liegt, verwendet wird,
- daß als Co-Flammschutzmittel Ammoniumpolyphosphat verwendet wird,
- daß als Co-Flammschutzmittel Kalkstickstoff verwendet wird,
- daß als Co-Flammschutzmittel Aluminiumoxidhydrat verwendet wird,
- daß als Co-Flammschutzmittel Calciumcarbonat verwendet wird,
- daß bei der Herstellung der Dispersionen ein Äquivalentverhältnis zwischen den primäre und/oder sekundäre Aminogruppen aufweisenden Polyaminen und/oder Hydrazinen und/oder Hydraziden und den Mono-und/oder Polyisocyanaten von NCO : NH im Bereich von 0,8 bis 1,05 gewählt worden ist,
- daß man als Dispersionen von Polymeren enthaltenden höhermolekularen Hydroxylverbindungen solche verwendet, die durch kontinuierliche getrennte Dosierung von
   1. organischen Polyisocyanaten,
   2. primäre und/oder sekundäre Aminogruppen aufweisenden Polyaminen und/oder Hydrazinen und/oder Hydraziden und
   3. mindestens eine Hydroxylgruppe aufweisenden Polyethern mit einem Molekulargewicht von 2.000 bis 16.000
   oder durch kontinuierliche Dosierung der Komponente 1 und den vereinigten Komponenten 2 und 3 in einen Durchflußmischer bei einer Verweilzeit von weniger als 10 Minuten im Durchflußmischer in einem Äquivalentverhältnis der Komponenten 1 und 2 zwischen 0,8 und 1,05 und Sammeln des aus dem Durchflußmischer austretenden Produkts in einer Vorlage, gegebenenfalls unter Nachrühren und gegebenenfalls unter Erhitzen auf 50 bis 150°C, erhalten worden sind,
- daß man als Polyisocyanat destilliertes Toluylendiisocyanat und als Dispersionen von Polymeren enthaltenden höhermolekularen Hydroxylverbindungen solche verwendet, die durch Umsetzung von Hydrazinderivaten und/oder Hydrazinaddukten der allgemeinen Formel

   R-NH-NH-R′ · (H₂O)ₙ

   in der R und R′ gleich oder verschieden sind und Wasserstoff, Alkyl-, Cycloalkyl-, Aryl-, Aralkyl-oder Acylreste bedeuten und n gleich 0 oder 1 ist, mit Polyisocyanaten in einem mindestens zwei Hydroxylgruppen aufweisenden Polyether mit einem Molekulargewicht von 1.500 bis 10.000, in dem mindestens 10 Gew.-% der vorhandenen Hydroxylgruppen primär sind, erhalten worden sind,
- daß man als Polyisocyanate Gemische aus Toluylendiisocyanat und aliphatischen, cycloaliphatischen oder anderen aromatischen Polyisocyanaten verwendet, wobei deren Menge jedoch kleiner als 50 Gew.-% der gesamten Polyisocyanatmenge ist.

Die Ausführungsbeispiele der GB-A 2 168 706 zeigen alle den erheblichen Nachteil einer starken Dochtwirkung durch die Blähgraphit-Komponente, verbunden mit einem Weiterbrennen und der Bildung eines völlig ungebundenen Abbrandes feinster Asche.

Überraschend wurde jedoch in PUR-Schaumstoffen gefunden, daß besonders bei Verwendung phosphorhaltiger anorganischer Zusätze hervorragen carbonisierende, zusammenhängende, flammwidrige und schwer entzündbare sowie selbstverlöschende Produkte erhalten werden. Vorteilhaft ist auch die jeweils geringe Wirkstoffmenge in der erfindungsgemäßen Kombination, um einen wirksamen Flammschutz zu erreichen. Bislang müssen nämlich jeweils 30 Gew.-Teile der Einzelkomponenten verwendet werden.

Für die Herstellung der Polyurethanschaumstoffe werden als Ausgangskomponenten eingesetzt:
1. Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

   Q(NCO)ₙ

   in der
   - n: = 2 - 4, vorzugsweise 2,
   und
   - Q: einen aliphatischen Kohlenwasserstoffrest mit 2 - 18, vorzugsweise 6 - 10 C-Atomen,
   einen cycloaliphatischen Kohlenwasserstoffrest mit 4 -15, vorzugsweise 5 - 10 C-Atomen,
   einen aromatischen Kohlenwasserstoffrest mit 6 -15, vorzugsweise 6 - 13 C-Atomen,
   oder einen araliphatischen Kohlenwasserstoffrest mit 8 -15, vorzugsweise 8 - 13 C-Atomen,
   bedeuten, z.B. solche Polyisocyanate, wie sie in der DE-OS 2 832 253, Seiten 10 - 11, beschrieben werden.

   Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4′-und/oder 2,4′-Diphenylmethandiisocyanat ableiten.
2. Ausgangskomponenten sind ferner Dispersionen von Polymeren enthaltenden höhermolekularen Hydroxylverbindungen, die durch Umsetzung von Mono- und/oder Polyisocyanaten mit primäre und/oder sekundäre Aminogruppen aufweisenden Polyaminen und/oder Hydrazinen und/oder Hydraziden und/oder Alkanolaminen in einem 1 bis 8 primäre und/oder sekundäre Hydroxylgruppen aufweisenden Polyether mit einem Molekulargewicht von 400 bis 16.000 hergestellt worden sind.
   Derartige Dispersionen von Polymeren enthaltenden höhermolekularen Polyethern sind z.B. aus DE-AS 25 19 004, DE-OS 25 50 796, DE-OS 25 50 797, DE-OS 25 50 833, DE-OS 25 50 862, DE-OS 26 38 759, DE-OS 26 39 254, US-PS 43 74 209, EP-A 00 79 115 und US-PS 4 381 351 bekannt.
3. Als Treibmittel werden Wasser (bevorzugt) und/oder leicht flüchtige organische Substanzen verwendet.
4. Erfindungsgemäß werden die aus der Polyurethanchemie an sich bekannten Katalysatoren wie tert.-Amine und/oder metallorganische Verbindungen eingesetzt.
5. Als Flammschutzmittel wird expandierbarer Graphit (Blähgraphit) entweder alleine oder jedoch vorzugsweise unter Zusatz eines anorganischen Co-Flammschutzmittels, verwendet.

Erfindungsgemäß bevorzugt sind solche Graphittypen, die durch Schwefelsäure modifiziert worden sind. Ihr Gehalt an gebundenem Sulfat liegt in der Regel zwischen 5 und 20 Gew.-%, je nach Herstellungsverfahren.

Möglich als Blähkomponente im Graphitgerüst sind jedoch beispielsweise auch Nitrat und Fluorid.

Als Co-Flammschutzmittel, die bevorzugt mitverwendet werden können, sind Ammoniumpolyphosphate des unter schliedlichsten Kondensationsgrades, Oligophosphate mit den unterschiedlichsten Kationenbestandteilen, Kalkstickstoff, Kalk, Aluminiumoxide, Aluminiumoxidhydrate und Boroxide. Jedoch können auch stickstoffreiche Komponenten wie Harnstoff, Melamin, Melaminderivate, Melaminsalze, Cyanamid und Dicyandiamid mitverwendet werden.
6. Ausgangskomponenten sind ferner gegebenenfalls Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/ oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4,
   gegenüber Isocyanaten reaktionsfähige Wasserstoffatome auf. Beispiele hierfür werden in der DE-OS 2 832 253, Seiten 19 - 20, beschrieben.
7. Gegebenenfalls mitzuverwenden sind auch oberflächenaktive Zusatzstoffe, wie Emulgatoren und Schaumstabilisatoren. Als Emulgatoren sind solche auf Basis alkoxilierter Fettsäuren und höherer Alkohole bevorzugt.
   Als Schaumstabilisatoren kommen vor allem Polyethersiloxane, speziell wasserlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 beschrieben.
   Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilstoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966. z.B. auf den Seiten 103 bis 113 beschrieben.

### Durchführung des erfindungsgemäßen Verfahrens:

Die Reaktionskomponenten werden erfindungsgemäß nach dem an sich bekannten Einstufenverfarhen, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, infrage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 3 178 490 und 3 182 104 bekannt.

Bei der Formverschäumung werden vielfach an sich bekannte "äußere Trennmittel," wie Siliconöle, mitverwendet. Man kann aber auch sogenannte "innere Trennmittel", gegebenenfalls im Gemisch mit äußeren Trennmitteln, verwenden, wie sie z.B. aus den DE-OS 2 121 670 und 2 307 589 bekannt geworden sind.

Selbstverständlich können aber auch Schaumstoffe durch Blockverschäumung oder nach dem an sich bekannten Doppeltransportbandverfahren hergestellt werden.

Die nach der Erfindung erhältlichen Produkte finden dort Anwendung, wo erhöhte Flammwidrigkeit für Polyurethanschaumstoffe erforderlich sind, wie z.B. zur Konfektionierung von Sitzmöbeln für bestimmte Anwendungsbereiche wie Theater, Kinos und Gaststätten mit verschärften Sicherheitsbestimmungen, aber auch zur Herstellung von Matratzen mit verbesserten Flammschutzeigenschaften, wie sie vom Test BS 5852, Part 2 und den dort aufgeführten Entzündungsquellen gefordert werden.

### Ausführungsbeispiele

Unter den für die Herstellung von Polyetherpolyurethanharnstoffschaumstoffen üblichen Bedingungen wurden zur Reaktion gebracht (die angegebenen Teile sind Gew.-Teile):

### Beispiel 1

100 Tle. einer Polyharnstoffdispersion auf der Basis eines aktiven Polyetherpolyols aus Trimethylolpropan, Propylenoxid, Ethylenoxid sowie eines Diamins und Toluylendiisocyanats, OH-Zahl 32
2,5 Tle. Wasser
2 Tle. Diethanolamin
0,44 Tle. Aminvernetzer auf der Basis eines höheren Alkanolamins
0,2 Tle. Aktivator Dabco 33LV (Houdry/Hüls) (Lösung von Triethylendiamin in Dipropylenglykol)
0,2 Tle. Aktivator A1 (UCC) (Bis-(2-dimethylaminoethyl)-ether)
0,5 Tle. Siliconstabilisator auf der Basis eines kurzkettig polyethermodifizierten Silicons
0,2 Tle. Zinnhexoat
2 Tle. Tris-(2-chlorethyl)-phosphat
20 Tle. Blähgraphit GHS Typ 3 (Sigri GmbH D-8901 Meitingen), Sulfatgehalt ca. 14 Gew.-%
39,4 Tle. eines Gemisches aus 80 Gew.-% 2,4-Toluylendiisocyanat und 20 Gew.-% 2,6-Toluylendiisocyanat
Startzeit: 8 sec. Steigzeit: 110 sec.
Prüfung der Entzündbarkeit nach BS 5852, Part 2, Crib 5
Brandzeit: 4,5 Min. identisch mit der der Krippe
Kratertiefe: 5 cm
Brandfläche: 200 cm²

### Beispiel 2 (Vergleichsversuch)

100 Tle. Füllstofffreies Polyol auf der Basis von Trimethylolpropan, Propylenoxid und Ethylenoxid mit mindestens 50 % primären OH-Gruppen, OH-Zahl 28
2,5 Tle. Wasser
2,0 Tle. Siliconstabilisator OS 20 (Bayer AG) auf der Basis eines langkettig polyethermodifizierten Silicons
0,6 Tle. Aktivator A1 (UCC) (Bis-(2-dimethylaminoethyl)-ether)
0,1 Tle. Zinnhexoat
20 Tle. Blähgraphit GHS Typ 3 (Sigri GmbH D-8901 Meitingen), Sulfatgehalt ca. 14 Gew.-%;
33,8 Tle. eines Gemisches aus 80 Gew.-% 2,4-Toluylendiisocyanat und 20 Gew.-% 2,6-Toluylendiisocyanat
Startzeit: 8 sec. Steigzeit: 75 sec.
Prüfung der Entzündbarkeit nach BS 5852, Part 2, Crib 5
Brandzeit:
Nach 6 Min. wurde wegen starker Flammausbreitung gelöscht, zu diesem Zeitpunkt war bereits eine Fläche von 400 cm² verbrannt.

### Beispiel 3

100 Tle. einer Polyharnstoffdispersion gemäß Beispiel 1
2,5 Tle. Wasser
2 Tle. Diethanolamin
0,44 Tle. Aminvernetzer gemäß Beispiel 1
0,2 Tle. Aktivator A1 gemäß Beispie 1
0,5 Tle. Stabilisator gemäß Beispiel 1
0,2 Tle. Zinnhexoat
0,2 Tle. Tris-(2-chlorethyl)-phosphat
20 Tle. Blähgraphit GHS Typ 3 (Sigri GmbH D-8901 Meitingen), Sulfatgehalt ca. 14 Gew.-%;
63,8 Tle. eines polymeren Diphenylmethanpolyisocyanates mit einem NCO-Gehaltes von 30 Gew.-%
Startzeit: 10 sec. Steigzeit: 115 sec.
Prüfung der Entzündbarkeit nach BS 5852, Part 2, Crib 5
Brandzeit: 4,5 Min.
Kratertiefe: 3,5 cm
Brandfläche: 120 cm²

### Beispiel 4

100 Tle. einer Polyharnstoffdispersion gemäß Beispiel 1
3,0 Tle. Wasser
0,25 Tle. Stabilisator gemäß Beispiel 1
1,0 Tle. Diethanolamin
0,66 Tle. Aminvernetzer gemäß Beispiel 1
0,25 Tle. Aktivator Dabco 33LV gemäß Beispiel 1
0,15 Tle. Zinnhexoat
2,0 Tle. Tris-(2-chlorethyl)-phosphat
10 Tle. Blähgraphit GHS Typ 3 (Sigri GmbH D-8901 Meitingen), Sulfatgehalt ca. 14 Gew.-%;
20 Tle. Ammoniumpolyphosphat vom Typ des Exolit 422 der Hoechst AG
4,0 Tle. Calciumhydroxid
40,6 Tle. eines Gemisches aus 80 Gew.-% 2,4-Toluylendiisocyanat und 20 Gew.-% 2,6-Toluylendiisocyanat
Das Entzündungsverhalten wird nach BS 5852, Part 2, Crib 5, geprüft.
Textil: PE-Bezug der Firma Lister (GB) 220 g/m²
Brandzeit: 4,5 min.,
Kratertiefe: 5 cm, die Abbrandfläche ist kompakt carbonisiert;
Masseverlust: 40 g
Schaumstoffeigenschaften
Rohdichte: 35,5 kg/m³
Zugfestigkeit: 80 KPa
Bruchdehnung: 64 %
Stauchhärte: 3,1 KPa
Druckverformungsrest: 5,7 %

### Beispiel 5

100 Tle. einer Polyharnstoffdispersion gemäß Beispiel 1
3 Tle. Wasser
3,0 Tle. Diethanolamin
0,4 Tle. Aminvernetzer gemäß Beispiel 1
0,3 Tle. Aktivator Dabco 33LV gemäß Beispiel 1
0,4 Tle. Aktivator A1 gemäß Beispiel 1
0,8 Tle. Stabilisator AC 3367 gemäß Beispiel 1
0,5 Tle. Zinnhexoat
2,0 Tle. Tris-(2-chlorethyl)-phosphat
10 Tle. Blähgraphit GHS Typ 3 (Sigri GmbH D-8901 Meitingen), Sulfatgehalt ca. 14 Gew.-%;
30 Tle. Ammoniumpolyphosphat vom Typ des Exolit 422 (Hoechst AG)
44,6 Tle. eines Gemisches aus 80 Gew.-% 2,4-Toluylendiisocyanat und 20 Gew.-% 2,6-Toluylendiisocyanat
Startzeit: 8 sec. Steigzeit: 125 sec.
Prüfung der Entzündbarkeit nach BS 5852, Part 2, Crib 5
Brandzeit: 3,0 Min.,
Kratertiefe: 5 cm; der Bodenbereich ist nicht geschädigt, die Abbrandfläche ist kompakt carbonisiert.
Masseverlust: 35 g
Schaumstoffeigenschaften
Rohdichte: 37,5 kg/m³
Zugfestigkeit: 80 KPa
Bruchdehnung: 65 %
Stauchhärte: 3,8 KPa
Druckverformungsrest: 5,8 %

### Beispiel 6

100 Tle. einer Polyharnstoffdispersion gemäß Beispiel 1
3,0 Tle. Wasser
2,0 Tle. Diethanolamin
0,44 Tle. Aminvernetzer gemäß Beispiel 1
0,2 Tle. Aktivator A1 gemäß Beispiel 1
0,2 Tle. Aktivator Dabco gemäß Beispiel 1
2,0 Tle. Tris-(2-chlorethyl)-phosphat
0,3 Tle. Zinnhexoat
20 Tl. Blähgraphit GHS Typ 3 (Sigri GmbH, D-8901 Meitingen), Sulfatgehalt ca. 14 Gew.-%;
20 Tle. Melamin
42 Tle. eines Gemisches aus 80 Gew.-% 2,4-Toluylendiisocyanat und 20 Gew.-% 2,6-Toluylendiisocyanat
Startzeit: 8 sec. Steigzeit: 105 sec.
Prüfung der Entzündbarkeit nach BS 5852, Part 2, Crib 5
Brandzeit: 3 Min.,
Kratertiefe: 4 cm, der tieferliegende Schaum ist nicht geschädigt.

### Beispiel 7

100 Tle. einer Polyharnstoffdispersion gemäß Beispiel 1
3 Tle. Wasser
2 Tle. Diethanolamin
0,44 Tle. Aminvernetzer gemäß Beispiel 1
0,2 Tle. Aktivator Dabco 33LV gemäß Beispiel 1
0,2 Tle. Aktivator A1 gemäß Beispiel 1
0,5 Tle. Stabilisator gemäß Beispiel 1
2 Tle. Tris-(2-chlorethyl)-phosphat
0,3 Tle. Zinnhexoat
20 Tle. Blähgraphit GHS Typ 3 (Sigri GmbH D-8901 Meitingen), Sulfatgehalt ca. 14 Gew.-%
20 Tle. des Aluminiumoxidhydrats Martinal (Martinswerk GmbH Bergheim, D-5010)
42 Tle. eines Gemisches aus 80 Gew.-% 2,4-Toluylendiisocyanat und 20 Gew.-% 2,6-Toluylendiisocyanat
Startzeit: 8 sec. Steigzeit: 105 sec.
Prüfung der Entzündbarkeit nach BS 5852, Part 2, Crib 5
Brandzeit: 4 Min.,
Kratertiefe: 4 cm, der tieferliegende Schaum ist nicht zerstört.
Masseverlust: 40 g
Schaumstoffeigenschaften
Rohdichte: 33,8 kg/m³
Zugfestigkeit: 90 KPa
Bruchdehnung; 130 %
Stauchhärte: 3,2 KPa
Druckverformungsrest: 4,5 %
Aus den Beispielen geht hervor, daß die erfindungsgemäß einzusetzende Kombination aus Blähgraphit und Polyolkomponente auf Basis einer Polyharnstoffdispersion zu einem merklich verbesserten Brennverhalten führt was sich insbesondere in einer verkürzten Nachbrennzeit des Schaumstoffs im Anschluß an die Krippenbrandzeit manifestiert.

## Patentansprüche

1. Verfahren zur Herstellung von Polyurethanschaumstoffen durch Umsetzung von 1) Polyisocyanaten mit 2) Dispersionen von Polymeren enthaltenden höhermolekularen Hydroxylverbindungen, die durch Umsetzung von Mono- und/oder Polyisocyanaten mit primäre und/oder sekundäre Aminogruppen aufweisenden Polyaminen und/oder Hydrazinen und/oder Hydraziden und/oder Alkanolaminen in einem 1 bis 8 primäre und/oder sekundäre Hydroxylgruppen aufweisenden Polyether mit einem Molekulargewicht von 400 bis 16.000 hergestellt worden sind, in Gegenwart von 3) Wasser und/oder organischen Treibmitteln und von 4) Katalysatoren und 5) Flammschutzmitteln, gegebenenfalls in Gegenwart von 6) Verbindungen mit mindestens zwei gegenüber Isocyanaten reaktionsfähigen Wasserstoffatomen und einem Molekulargewicht von 32 bis 399 sowie 7) an sich bekannten oberflächenaktiven Zusatzstoffen und weiteren, an sich bekannten Hilfsmitteln, dadurch gekennzeichnet, daß als Flammschutzmittel 5)
a) 1 bis 35 Gew.-Teile, bevorzugt 1 bis 30 Gew.-Teile (bezogen auf 100 Gew.-Teile 2)) eines durch anorganische blähfähige Materialien modifizierten Graphits,
verwendet werden.

2. Verfahren nach Anspruch 1, dadurch gekennzeichnet, daß als Flammschutzmittel
a) 1 bis 35 Gew.-Teile, bevorzugt 1 bis 30 Gew.-Teile, besonders bevorzugt 2,5 bis 20 Gew.-Teile (bezogen auf 100 Gew.-Teile 2)) eines durch anorganische blähfähige Materialien modifizierten Graphits,
b) 1 bis 35 Gew.-Teile,bevorzugt 1 bis 30 Gew.-Teile, besonders bevorzugt 2,5 bis 20 Gew.-Teile (bezogen auf 100 Gew.-Teile 2)) eines anorganischen Co-Flammschutzmittels,
verwendet werden.

3. Verfahren nach Anspruch 1 und 2, dadurch gekennzeichnet, daß ein Sulfat-enthaltender Blähgraphit, dessen Sulfat-Gehalt zwischen 1 und 40 Gew.-%, bevorzugt 1 bis 30 Gew.-%, besonders bevorzugt 5 bis 20 Gew.-% liegt, verwendet wird.

4. Verfahren nach Anspruch 2 und 3, dadurch gekennzeichnet, daß als Co-Flammschutzmittel Ammoniumpolyphosphat verwendet wird.

5. Verfahren nach Anspruch 2 und 3, dadurch gekennzeichnet, daß als Co-Flammschutzmittel Kalkstickstoff verwendet wird.

6. Verfahren nach Anspruch 2 und 3, dadurch gekennzeichnet, daß als Co-Flammschutzmittel Aluminiumoxidhydrat verwendet wird.

7. Verfahren nach Anspruch 2 und 3, dadurch gekennzeichnet, daß als Co-Flammschutzmittel Calciumcarbonat verwendet wird.

8. Verfahren nach Anspruch 1 - 7, dadurch gekennzeichnet, daß bei der Herstellung der Dispersionen ein Äquivalentverhältnis zwischen den primäre und/oder sekundäre Aminogruppen aufweisenden Polyaminen und/oder Hydrazinen und/oder Hydraziden und den Mono- und/oder Polyisocyanaten von NCO : NH im Bereich von 0,8 bis 1,05 gewählt worden ist.

9. Verfahren nach den Ansprüchen 1 bis 8, dadurch gekennzeichnet, daß man als Dispersionen von Polymeren enthaltenden höhermolekularen Hydroxylverbindungen solche verwendet, die durch kontinuierliche getrennte Dosierung von
1. organischen Polyisocyanaten,
2. primäre und/oder sekundäre Aminogruppen aufweisenden Polyaminen und/oder Hydrazinen und/oder Hydraziden und
3. mindestens eine Hydroxylgruppe aufweisenden Polyethern mit einem Molekulargewicht von 2.000 bis 16.000
oder durch kontinuierliche Dosierung der Komponente 1 und den vereinigten Komponenten 2 und 3 in einen Durchflußmischer bei einer Verweilzeit von weniger als 10 Minuten im Durchflußmischer in einem Äquivalentverhältnis der Komponenten 1 und 2 zwischen 0,8 und 1,05 und Sammeln des aus dem Durchflußmischer austretenden Produkts in einer Vorlage, gegebenenfalls unter Nachrühren und gegebenenfalls unter Erhitzen auf 50 bis 150°C, erhalten worden sind.

10. Verfahren nach den Ansprüchen 1 - 9, dadurch gekennzeichnet, daß man als Polyisocyanat destilliertes Toluylendiisocyanat und als Dispersionen von Polymeren enthaltenden höhermolekularen Hydroxylverbindungen solche verwendet, die durch Umsetzung von Hydrazinderivaten und/oder Hydrazinaddukten der allgemeinen Formel
R-NH-NH-R' · (H₂O)ₙ
in der R und R' gleich oder verschieden sind und Wasserstoff, Alkyl-, Cycloalkyl-, Aryl-, Aralkyl- oder Acylreste bedeuten und n gleich 0 oder 1 ist, mit Polyisocyanaten in einem mindestens zwei Hydroxylgruppen aufweisenden Polyether mit einem Molekulargewicht von 1.500 bis 10.000, in dem mindestens 10 Gew.-% der vorhandenen Hydroxylgruppen primär sind, erhalten worden sind.

11. Verfahren nach Anspruch 10, dadurch gekennzeichnet, daß man als Polyisocyanate Gemische aus Toluylendiisocyanat und aliphatischen, cycloaliphatischen oder anderen aromatischen Polyisocyanaten verwendet, wobei deren Menge jedoch kleiner als 50 Gew.-% der gesamten Polyisocyanatmenge ist.

12. Polyurethanschaumstoffe, erhältlich nach den Verfahren gemäß Ansprüchen 1 - 11.

## Claims

1. A process for the production of polyurethane foams by reaction of 1) polyisocyanates with 2) dispersions of polymer-containing, relatively high molecular weight hydroxyl compounds, which have been obtained by reaction of mono- and/or polyisocyanates with polyamines containing primary and/or secondary amino groups and/or hydrazines and/or hydrazides and/or amino alcohols in a polyether containing 1 to 8 primary and/or secondary hydroxyl groups and having a molecular weight of from 400 to 16,000, in the presence of 3) water and/or organic blowing agents and 4) catalysts and 5) flameproofing agents, optionally in the presence of 6) compounds containing at least two isocyanate-reactive hydrogen atoms and having a molecular weight of 32 to 399 and 7) surface-active additives known per se and other auxiliaries known per se, characterized in that
a) 1 to 35 parts by weight and preferably 1 to 30 parts by weight, based on 100 parts by weight 2), of a graphite modified by inorganic expandable materials
are used as the flameproofing agent 5).

2. A process as claimed in claim 1, characterized in that
a) 1 to 35 parts by weight, preferably 1 to 30 parts by weight and more preferably 2.5 to 20 parts by weight, based on 100 parts by weight 2), of a graphite modified by inorganic expandable materials,
b) 1 to 35 parts by weight, preferably 1 to 30 parts by weight and more preferably 2.5 to 20 parts by weight, based on 100 parts by weight 2), of an inorganic co-flameproofing agent
are used as the flameproofing agent.

3. A process as claimed in claims 1 and 2, characterized in that a sulfate-containing expanded graphite having a sulfate content of 1 to 40% by weight, preferably 1 to 30% by weight and more preferably 5 to 20% by weight is used.

4. A process as claimed in claims 2 and 3, characterized in that ammonium polyphosphate is used as the co-flameproofing agent.

5. A process as claimed in claims 2 and 3, characterized in that nitrolime is used as the co-flameproofing agent.

6. A process as claimed in claims 2 and 3, characterized in that aluminium oxide hydrate is used as the co-flameproofing agent.

7. A process as claimed in claims 2 and 3, characterized in that calcium carbonate is used as the co-flameproofing agent.

8. A process as claimed in claims 1 to 7, characterized in that an equivalent ratio between the polyamines containing primary and/or secondary amino groups and/or hydrazines and/or hydrazides and the mono- and/or polyisocyanates of from 0.8 to 1.05 (NCO:NH) is selected for the preparation of the dispersions.

9. A process as claimed in claims 1 to 8, characterized in that the dispersions of polymer-containing, relatively high molecular weight hydroxyl compounds used are obtained by the continuous, separate introduction of
1. organic polyisocyanates,
2. polyamines containing primary and/or secondary amino groups and/or hydrazines and/or hydrazides and
3. polyethers containing at least one hydroxyl group and having a molecular weight of 2,000 to 16,000
or by continuous introduction of component 1 and combined components 2 and 3 into a flow mixer, in which the residence time is less than 10 minutes, in an equivalent ratio between components 1 and 2 of from 0.8 to 1.05 and collection of the product issuing from the flow mixer in a receiver, optionally with subsequent stirring and optionally with heating to 50 to 150°C.

10. A process as claimed in claims 1 to 9, characterized in that the polyisocyanate used is distilled tolylene diisocyanate and the dispersions of polymer-containing, relatively high molecular weight hydroxyl compounds used have been obtained by reaction of hydrazine derivatives and/or hydrazine adducts corresponding to the following general formula
R-NH-NH-R' · (H₂O)ₙ
in which R and R' are the same or different and represent hydrogen, alkyl, cycloalkyl, aryl, aralkyl or acyl radicals and n = 0 or 1,
with polyisocyanates in a polyether containing at least two hydroxyl groups and having a molecular weight of from 1,500 to 10,000, in which at least 10% by weight of the hydroxyl groups present are primary hydroxyl groups.

11. A process as claimed in claim 10, characterized in that the polyisocyanates used are mixtures of tolylene diisocyanate and aliphatic, cycloaliphatic or other aromatic polyisocyanates, in which these other polyisocyanates make up less than 50% by weight of the total quantity of polyisocyanates.

12. Polyurethane foams obtainable by the process claimed in claims 1 to 11.

## Revendications

1. Procédé de préparation de mousses de polyuréthannes par réaction de 1) des polyisocyanates avec 2) des dispersions de composés hydroxylés à haut poids moléculaire contenant des polymères qui ont été préparés par réaction de mono- et/ou polyisocyanate avec des polyamines contenant des groupes amino primaires et/ou secondaires et/ou des hydrazines, et/ou des hydrazides, et/ou des alcanolamines dans un polyéther contenant de un à huit groupes hydroxy primaires et/ou secondaires, de poids moléculaire 400 à 16 000, en présence de 3) de l'eau et/ou des agents porogènes organiques, et de 4) des catalyseurs et 5) des agents ignifugeants, le cas échéant en présence de 6) des composés à au moins deux atomes d'hydrogène réactif avec les isocyanates ayant un poids moléculaire de 32 à 399 et 7) des additifs tensioactifs connus en soi et d'autres produits auxiliaires connus en soi, ce procédé se caractérisant en ce que l'on utilise en tant qu'agent ignifugeant 5)
a) 1 à 35 parties en poids de préférence 1 à 30 parties en poids (pour 100 parties en poids de 2)) d'un graphite modifié par des matières minérales gonflables.

2. Procédé selon la revendication 1, caractérisé en ce que l'on utilise en tant qu'agents ignifugeant
a) 1 à 35 parties en poids, de préférence 1 à 30 parties en poids et plus spécialement 2,5 à 20 parties en poids (pour 100 parties en poids de 2)) d'un graphite modifié par des matières minérales gonflables,
b) 1 à 35 parties en poids, de préférence 1 à 30 parties en poids et plus spécialement 2,5 à 20 parties en poids (pour 100 parties en poids de 2)) d'un agent ignifugeant auxiliaire minéral.

3. Procédé selon les revendications 1 et 2, caractérisé en ce que l'on utilise un graphite gonflable contenant un sulfate, à une teneur en sulfate de 1 à 40 % en poids, de préférence de 1 à 30 % en poids et plus spécialement de 5 à 20 % en poids.

4. Procédé selon les revendications 2 et 3, caractérisé en ce que l'on utilise en tant qu'agent ignifugeant auxiliaire un polyphosphate d'ammonium.

5. Procédé selon les revendications 2 et 3, caractérisé en ce que l'on utilise en tant qu'agent ignifugeant auxiliaire le cyanamide calcique.

6. Procédé selon les revendications 2 et 3, caractérisé en ce que l'on utilise en tant qu'agent ignifugeant auxiliaire de l'alumine hydratée.

7. Procédé selon les revendications 2 et 3, caractérisé en ce que l'on utilise en tant qu'agent ignifugeant auxiliaire le carbonate de calcium.

8. Procédé selon les revendications 1 à 7, caractérisé en ce que, à la préparation des dispersions, on opère à un apport NCO/NH dans l'intervalle de 0,8 à 1,05, entre les équivalents de groupes amino primaires et/ou secondaires des polyamines et/ou hydrazines et/ou hydrazides et les équivalents de NCO des mono- et/ou polyisocyanates.

9. Procédé selon les revendications 1 à 8, caractérisé en ce que l'on utilise en tant que dispersions de composés hydroxylés à haut poids moléculaire contenant des polymères des dispersions de ce type qui ont été obtenues par dosage continu mais séparé de
1. des polyisocyanates organiques,
2. des polyamines à groupes amino primaires et/ou secondaires et/ou des hydrazines et/ou des hydrazides et
3. des polyéthers contenant au moins un groupe hydroxy, de poids moléculaire de 1 000 à 16 000,
ou par dosage continu du composant 1 et des composants 2 et 3 combinés dans un mélangeur continu dans lequel la durée de passage est inférieure à 10 min, à un rapport de 0,8 à 1,05 entre les équivalents des composants 1 et 2, le produit sortant du mélangeur continu étant recueilli dans un récepteur, le cas échéant sous agitation et le cas échéant avec chauffage à des températures de 50 à 150°C.

10. Procédé selon les revendications 1 à 9, caractérisé en ce que l'on utilise en tant que polyisocyanate du toluylènediisocyanate distillé et en tant que dispersions de composés hydroxylés et à haut poids moléculaire contenant des polymères de telles dispersions qui ont été obtenues par réaction de dérivés de l'hydrazine et/ou d'adducts de l'hydrazine de formule générale
R-NH-NH-R' · (H₂O)ₙ
dans laquelle R et R', ayant des significations identiques ou différentes, représentent chacun l'hydrogène, un groupe alkyle, cycloalkyle, aryle, aralkyle ou acyle et n est égal à 0 ou 1, avec des polyisocyanates dans un polyéther contenant au moins deux groupes hydroxy, de poids moléculaire 1 500 à 10 000 et dans lequel au moins 10 % en poids des groupes hydroxy présents sont primaires.

11. Procédé selon la revendication 10, caractérisé en ce que l'on utilise en tant que polyisocyanates des mélanges de toluylènediisocyanate et de polyisocyanates aliphatiques, cycloaliphatiques ou d'autres polyisocyanates aromatiques dont la quantité toutefois doit rester inférieure à 50 % du poids du total des polyisocyanates.

12. Mousses de polyuréthannes obtenues par les procédés des revendications 1 à 11.
